# DEMANDE DE BREVET EUROPEEN

(11) **EP 4 062 998 A1**
(43) Date de publication de la demande: **28.09.2022**
(21) Numéro de dépôt: 22163331.6
(22) Date de dépôt: 21.03.2022
(51) Int. Cl.: B01D 53/00, B01D 53/047, B01D 53/22

(54) **INSTALLATION ET PROCÉDÉ PERMETTANT D OBTENIR DU BIOMÉTHANE CONFORME AUX SPÉCIFICITÉS D'UN RÉSEAU DE TRANSPORT**

(30) Priorité: 22.03.2021 FR 2102829
(71) Demandeur: L'Air Liquide, société anonyme pour l'Étude et l'Exploitation des procédés Georges Claude, 75007 Paris (FR)
(72) Inventeur: TAZI, Youssef, 77024 HOUSTON, TX (US); AYRAULT, Laura, 38360 SASSENAGE (FR); GRABIE, Véronique, 38360 SASSENAGE (FR)
(74) Mandataire: Air Liquide

(57) **Abrégé**

Installation de production de biométhane (B) épuré en CO2 et en eau à partir d'un flux gazeux d'alimentation (A) comprenant du méthane et du dioxyde de carbone comprenant :
- Un compresseur (0) permettant de comprimer le flux gazeux d'alimentation,
- Un refroidisseur (1) permettant de refroidir le flux gazeux d'alimentation comprimé de manière à condenser au moins une partie de l'eau comprise dans le flux gazeux d'alimentation,
- Un moyen (2) permettant d'éliminer au moins une partie de l'eau condensée dans le flux gazeux d'alimentation,
- Une unité de séparation membranaire (4) apte à recevoir le flux gazeux d'alimentation issu du moyen (2) et à fournir un perméat enrichi en dioxyde de carbone et du biométhane épuré en dioxyde de carbone,
- Une unité de purification par adsorption (5) permettant d'éliminer au moins une partie de l'eau restante dans le biométhane épuré en dioxyde de carbone et de récupérer du biométhane épuré en dioxyde de carbone et en eau.

## Description

La présente invention est relative à une installation et un procédé de production de biométhane épuré en dioxyde de carbone et en eau à partir d'un flux gazeux d'alimentation comprenant du méthane et du dioxyde de carbone, de préférence du biogaz ou du biométhane.

Le biogaz est le gaz produit lors de la dégradation de matières organiques en l'absence d'oxygène (fermentation anaérobie) encore appelée méthanisation. Il peut s'agir d'une dégradation naturelle - on l'observe ainsi dans les marais ou les décharges d'ordures ménagères - mais la production de biogaz peut aussi résulter de la méthanisation de déchets dans un réacteur dédié, appelé méthaniseur ou digesteur.

De par ses constituants principaux - méthane et dioxyde de carbone - le biogaz est un puissant gaz à effet de serre ; il constitue aussi, parallèlement, une source d'énergie renouvelable appréciable dans un contexte de raréfaction des énergies fossiles.

Le biogaz contient majoritairement du méthane (CH4) et du dioxyde de carbone (CO2) dans des proportions variables en fonction du mode d'obtention mais également, en moindres proportions de l'eau, de l'azote, de l'hydrogène sulfuré, de l'oxygène, ainsi que des composés organiques autres, à l'état de traces.

Selon les matières organiques dégradées et les techniques utilisées, les proportions des composants diffèrent, mais en moyenne le biogaz comporte, sur gaz sec, de 30 à 75% de méthane, de 15 à 60% de CO2, de 0 à 15% d'azote, de 0 à 5% d'oxygène et des composés traces.

Le biogaz est valorisé de différentes manières. Il peut, après un traitement léger, être valorisé à proximité du site de production pour fournir de la chaleur, de l'électricité ou un mélange des deux (la cogénération); la teneur importante en dioxyde de carbone réduit son pouvoir calorifique, augmente les coûts de compression et de transport et limite l'intérêt économique de sa valorisation à cette utilisation de proximité.

Une purification plus poussée du biogaz permet sa plus large utilisation, en particulier, une purification poussée du biogaz permet d'obtenir un biogaz épuré aux spécifications du gaz naturel et qui pourra lui être substitué ; le biogaz ainsi purifié est le « biométhane ». Le biométhane complète ainsi les ressources de gaz naturel avec une partie renouvelable produite au cœur des territoires; il est utilisable pour exactement les mêmes usages que le gaz naturel d'origine fossile. Il peut alimenter un réseau de gaz naturel, une station de remplissage pour véhicules, il peut aussi être liquéfié pour être stocké sous forme de gaz naturel liquide (GNL).

Les modes de valorisation du biométhane sont déterminés en fonction des contextes locaux : besoins énergétiques locaux, possibilités de valorisation en tant que biométhane carburant, existence à proximité de réseaux de distribution ou de transport de gaz naturel notamment. Créant des synergies entre les différents acteurs œuvrant sur un territoire (agriculteurs, industriels, pouvoirs publics), la production de biométhane aide les territoires à acquérir une plus grande autonomie énergétique.

Plusieurs étapes doivent être franchies entre la collecte du biogaz et l'obtention du biométhane, produit final apte à être comprimé ou liquéfié.

Le dioxyde de carbone est un contaminant typiquement présent dans le gaz naturel dont il est courant de devoir le débarrasser.

L'eau cependant est un contaminant qui a rarement été supprimé à des taux très faibles. En effet, les teneurs en eau à atteindre sont généralement de l'ordre de 100 à 300 ppm, parce que ces teneurs suffisent pour le réseau de distribution (Point de rosée eau Inférieur à - 5°C à la pression maximale de service du réseau, le réseau de distribution étant entre 4 et 8 barg). Dans le cadre de la présente invention, nous souhaitons pouvoir compresser le biométhane à un niveau nécessitant une élimination de l'eau plus poussée de manière à pouvoir interconnecter un réseau de distribution travaillant à basse pression, typiquement entre 4 et 8 bar, et un réseau de transport travaillant entre 40 et 70 bar.

Cette opération dite de rebours vise à « dé-congestionner » le réseau pour faire en sorte que le nombre de projets à venir ne soit pas limité par la place dans le réseau de distribution. Partant de là, un problème qui se pose est de fournir une installation et un procédé permettant d'obtenir du biométhane épuré en dioxyde de carbone et en eau pour être conforme aux spécificités du réseau de transport travaillant à plus haute pression.

Une solution de la présente invention est une installation de production de biométhane B épuré en CO₂ et en eau à partir d'un flux gazeux d'alimentation A comprenant du méthane et du dioxyde de carbone comprenant :
- Un compresseur 0 permettant de comprimer le flux gazeux d'alimentation,
- Un refroidisseur 1 permettant de refroidir le flux gazeux d'alimentation comprimé de manière à condenser au moins une partie de l'eau comprise dans le flux gazeux d'alimentation
- Un moyen 2 permettant d'éliminer au moins une partie de l'eau condensée dans le flux gazeux d'alimentation,
- Une unité de séparation membranaire 4 apte à recevoir le flux gazeux d'alimentation issu du moyen 2 et à fournir un perméat enrichi en dioxyde de carbone et du biométhane épuré en dioxyde de carbone, et
- Une unité de purification par adsorption 5 permettant d'éliminer au moins une partie de l'eau restante dans le biométhane épuré en dioxyde de carbone et de récupérer du biométhane épuré en dioxyde de carbone et en eau.

Selon le cas l'installation selon l'invention peut présenter une ou plusieurs des caractéristiques ci-dessous :
- l'unité de purification par adsorption 5 comprend au moins un adsorbeur et l'installation comprend un moyen R de régénération de l'adsorbeur à l'aide d'une partie du flux gazeux d'alimentation issu du moyen 2 comme gaz de régénération ; notons que cette partie du biogaz issu du moyen 2 sera de préférence chauffée dans un réchauffeur, de préférence à une température supérieure à 150°C
- l'installation comprend un moyen de récupération d'un gaz de régénération en sortie de l'adsorbeur et un moyen de recyclage du gaz de régénération en amont du compresseur 0;
- l'installation comprend entre le moyen de récupération du gaz de régénération et le moyen de recyclage du gaz de régénération un refroidisseur 7 permettant de refroidir le gaz de régénération de manière à condenser au moins une partie de l'eau comprise dans le gaz de régénération et un moyen 8 permettant d'éliminer au moins une partie de l'eau condensée dans le gaz de régénération ;
- l'adsorbeur comprend un adsorbant choisi parmi l'alumine ou le tamis moléculaire ;
- l'installation comprend un échangeur de chaleur 3 permettant de chauffer le flux gazeux d'alimentation issu du moyen 2 avant son entrée dans le l'unité de séparation membranaire 4;
- l'installation comprend un analyseur 12 permettant de mesurer la concentration en CO2 et/ou en eau dans le biométhane B épuré en dioxyde de carbone et en eau.

L'installation pourra également comprendre un analyseur permettant de mesurer la concentration en CO2 et/ou en eau dans le biométhane épuré en dioxyde de carbone en sortie de l'unité de séparation membranaire.

Notons que l'unité de purification par adsorption sera de préférence de type PSA (pressure swing adsorption = adsorption à pression modulée).

L'unité de purification comprendra de préférence au moins deux adsorbeurs suivant en décalage un cycle de pression comprenant une phase d'adsorption (purification) et une phase de régénération.

L'unité de séparation membranaire ne comprendra de préférence qu'un seul étage membranaire. Autrement dit le rétentat ne sera pas envoyé dans un second étage membranaire.

La présente invention a également pour objet un procédé de production de biométhane B épuré en CO2 et en eau à partir d'un flux gazeux d'alimentation A comprenant du méthane et du dioxyde de carbone, mettant en œuvre une œuvre une installation selon l'invention, et comprenant :
a) Une étape de compression 0 du flux gazeux d'alimentation A,
b) Une étape de refroidissement 1 du flux gazeux d'alimentation comprimé de manière à condenser au moins une partie de l'eau comprise dans le flux gazeux d'alimentation,
c) Une étape d'élimination 2 d'au moins une partie de l'eau condensée dans le flux gazeux d'alimentation,
d) Une étape de séparation membranaire du méthane et du dioxyde de carbone dans le flux gazeux issu de l'étape c) dans l'unité de séparation membranaire 4 de manière à récupérer un perméat 10 enrichi en dioxyde de carbone et un flux de biométhane 11 épuré en dioxyde de carbone,
e) Une étape de récupération d'un flux de biométhane 11 épuré en dioxyde de carbone,
f) Une étape de purification par adsorption dans l'adsorbeur 5 du flux de biométhane 11 issu de l'étape e) de manière à éliminer au moins une partie de l'eau restante dans le flux de biométhane 11, et
g) Une étape de récupération de biométhane B épuré en dioxyde de carbone et en eau.

Selon le cas le procédé selon l'invention peut présenter une ou plusieurs des caractéristiques ci-dessous :
- Le procédé comprend une étape de régénération de l'adsorbeur à l'aide d'une partie R du flux gazeux issu de l'étape c) comme gaz de régénération.
- Le procédé comprend une étape de récupération du gaz de régénération en sortie de l'adsorbeur et une étape de recyclage de ce gaz de régénération en amont de la compression.
- Le procédé comprend entre l'étape de récupération du gaz de régénération et l'étape de recyclage du gaz de régénération une étape de refroidissement 7 de manière à condenser au moins une partie de l'eau comprise dans le gaz de régénération et une étape d'élimination 8 d'au moins une partie de l'eau condensée dans le gaz de régénération.
- Le procédé comprend une étape de chauffage du biogaz issu de l'étape c).
- Le procédé comprend une étape de mesure 12 de la concentration en CO2 et/ou en eau dans le biométhane B épuré en dioxyde de carbone et en eau.
- A l'étape a) le flux gazeux d'alimentation est comprimé 0 à une pression supérieure à 60 bar.
- A l'étape b) le flux gazeux d'alimentation est refroidi 1 à une température inférieure à 15°C.
- Le flux gazeux d'alimentation A est choisi entre du biogaz ou du biométhane.

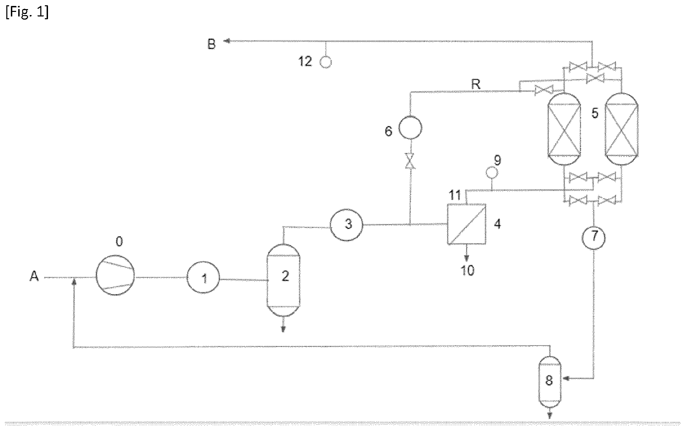

La présente invention va à présent être décrite plus en détail à l'aide de la Figure 1.

La Figure 1 représente un exemple d'installation selon l'invention.

Dans le cadre de cet exemple le flux gazeux d'alimentation A est du biométhane comprenant 3,5% de CO2, 800 ppm d'eau et le reste en méthane ; il présente un débit de 760 Nm³/h et une pression de 3,5 bar. Le biométhane A est dans un premier temps comprimé dans un compresseur 0 à une pression de 62 bar avant d'être refroidi 1 à une température de 5°C. Ce refroidissement permet de condenser l'eau qui est éliminée dans un séparateur 2. 80% de l'eau comprise initialement dans le biométhane A est ainsi éliminée. Le biogaz est ensuite chauffé à une température de 15°C dans un échangeur 3 avant d'être introduit dans l'unité de séparation membranaire 4. Cette unité de séparation membranaire 4 comprend au moins une membrane perméable au dioxyde de carbone et permet ainsi de récupérer un perméat 10 enrichi en dioxyde de carbone et du biométhane 11 épuré en dioxyde de carbone, c'est-à-dire comprenant dans le cas présent 2,5% de dioxyde de carbone. Le biométhane 11 épuré en dioxyde de carbone est analysé dans l'analyseur 9 afin de contrôler la concentration en CO2 et/ou en eau avant d'être introduit dans l'unité de purification par adsorption 5 afin d'éliminer au moins une partie de l'eau restante dans le biométhane épuré en dioxyde de carbone. L'unité de purification par adsorption 5 comprend deux adsorbeurs qui suivent chacun en décalage un cycle de pression comprenant une phase d'adsorption et une phase de régénération. Ces adsorbeurs comprennent chacun un adsorbant permettant d'adsorber l'eau, choisi entre l'alumine et le tamis moléculaire. On récupère en sortie de l'unité de purification par adsorption du biométhane épuré en dioxyde de carbone et en eau. Il comprend précisément 2,5% de CO2, moins de 40 ppm d'eau et le reste en méthane. Cette composition est vérifiée dans l'analyseur 12. L'adsorbant des adsorbeurs est régénéré à l'aide d'une partie R du biogaz sortant de l'échangeur 2. Cette partie R du biométhane est chauffé dans un réchauffeur 6 à une température de 150°C avant d'être introduit comme gaz de régénération dans l'adsorbeur en régénération de l'unité de séparation membranaire 5. On récupère en sortie de l'unité de séparation membranaire 5 le gaz de régénération qui est refroidit à 20°C dans un refroidisseur 7, ce qui permet de condenser au moins une partie de l'eau comprise le gaz de régénération. Cette eau condensée sera éliminée 8 avant d'être recyclé en amont du compresseur 0.

## Revendications

1. Installation de production de biométhane (B) épuré en CO2 et en eau à partir d'un flux gazeux d'alimentation (A) comprenant du méthane et du dioxyde de carbone comprenant :
- Un compresseur (0) permettant de comprimer le flux gazeux d'alimentation,
- Un refroidisseur (1) permettant de refroidir le flux gazeux d'alimentation comprimé de manière à condenser au moins une partie de l'eau comprise dans le flux gazeux d'alimentation
- Un moyen (2) permettant d'éliminer au moins une partie de l'eau condensée dans le flux gazeux d'alimentation,
- Une unité de séparation membranaire (4) apte à recevoir le flux gazeux d'alimentation issu du moyen (2) et à fournir un perméat enrichi en dioxyde de carbone et du biométhane épuré en dioxyde de carbone,
- Une unité de purification par adsorption (5) permettant d'éliminer au moins une partie de l'eau restante dans le biométhane épuré en dioxyde de carbone et de récupérer du biométhane épuré en dioxyde de carbone et en eau.

2. Installation selon la revendication 1, **caractérisée en ce que** l'unité de purification par adsorption (5) comprend au moins un adsorbeur et l'installation comprend un moyen R de régénération de l'adsorbeur à l'aide d'une partie du flux gazeux d'alimentation issu du moyen (2) comme gaz de régénération.

3. Installation selon la revendication 2, **caractérisée en ce qu'**elle comprend un moyen de récupération d'un gaz de régénération en sortie de l'adsorbeur et un moyen de recyclage du gaz de régénération en amont du compresseur (0).

4. Installation selon la revendication 3, **caractérisée en ce qu'**elle comprend entre le moyen de récupération du gaz de régénération et le moyen de recyclage du gaz de régénération un refroidisseur (7) permettant de refroidir le gaz de régénération de manière à condenser au moins une partie de l'eau comprise dans le gaz de régénération et un moyen (8) permettant d'éliminer au moins une partie de l'eau condensée dans le gaz de régénération.

5. Installation selon l'une des revendications 1 à 4, **caractérisée en ce que** l'adsorbeur comprend un adsorbant choisi parmi l'alumine ou le tamis moléculaire.

6. Installation selon l'une des revendications 1 à 5, **caractérisée en ce qu'**elle comprend un échangeur de chaleur (3) permettant de chauffer le flux gazeux d'alimentation issu du moyen (2) avant son entrée dans le l'unité de séparation membranaire (4).

7. Installation selon l'une des revendications 1 à 6, **caractérisée en ce qu'**elle comprend un analyseur (12) permettant de mesurer la concentration en CO2 et/ou en eau dans le biométhane B épuré en dioxyde de carbone et en eau.

8. Procédé de production de biométhane (B) épuré en CO2 et en eau à partir d'un flux gazeux d'alimentation (A) comprenant du méthane et du dioxyde de carbone, mettant en œuvre une œuvre une installation selon l'une des revendications 1 à 7, et comprenant :
a) Une étape de compression (0) du flux gazeux d'alimentation (A),
b) Une étape de refroidissement (1) du flux gazeux d'alimentation comprimé de manière à condenser au moins une partie de l'eau comprise dans le flux gazeux d'alimentation,
c) Une étape d'élimination (2) d'au moins une partie de l'eau condensée dans le flux gazeux d'alimentation,
d) Une étape de séparation membranaire du méthane et du dioxyde de carbone dans le flux gazeux issu de l'étape c) dans l'unité de séparation membranaire (4) de manière à récupérer un perméat (10) enrichi en dioxyde de carbone et un flux de biométhane (11) épuré en dioxyde de carbone,
e) Une étape de récupération d'un flux de biométhane (11) épuré en dioxyde de carbone,
f) Une étape de purification par adsorption dans l'adsorbeur (5) du flux de biométhane (11) issu de l'étape e) de manière à éliminer au moins une partie de l'eau restante dans le flux de biométhane (11), et
g) Une étape de récupération de biométhane (B) épuré en dioxyde de carbone et en eau.

9. Procédé selon la revendication 8, **caractérisé en ce qu'**il comprend une étape de régénération de l'adsorbeur à l'aide d'une partie (R) du flux gazeux issu de l'étape c) comme gaz de régénération.

10. Procédé selon la revendication 9, **caractérisé en ce qu'**il comprend une étape de récupération du gaz de régénération en sortie de l'adsorbeur et une étape de recyclage de ce gaz de régénération en amont de la compression.

11. Procédé selon la revendication 10, **caractérisé en ce qu'**il comprend entre l'étape de récupération du gaz de régénération et l'étape de recyclage du gaz de régénération une étape de refroidissement (7) de manière à condenser au moins une partie de l'eau comprise dans le gaz de régénération et une étape d'élimination (8) d'au moins une partie de l'eau condensée dans le gaz de régénération.

12. Procédé selon l'une des revendications 8 à 11, **caractérisé en ce qu'**il comprend une étape de chauffage du biogaz issu de l'étape c).

13. Procédé selon l'une des revendications 8 à 12, **caractérisé en ce qu'**il comprend une étape de mesure (12) de la concentration en CO2 et/ou en eau dans le biométhane B épuré en dioxyde de carbone et en eau.

14. Procédé selon l'une des revendications 8 à 13, **caractérisé en ce qu'**à l'étape a) le flux gazeux d'alimentation est comprimé (0) à une pression supérieure à 60 bar.

15. Procédé selon l'une des revendications 8 à 14, **caractérisé en ce qu'**à l'étape b) le flux gazeux d'alimentation est refroidi (1) à une température inférieure à 15°C.

16. Procédé selon l'une des revendications 8 à 15, **caractérisé en ce que** le flux gazeux d'alimentation (A) est choisi entre du biogaz ou du biométhane.
